# EUROPÄISCHE PATENTSCHRIFT

(11) **EP 3 715 561 B1**
(45) Veröffentlichungstag und Bekanntmachung des Hinweises auf die Patenterteilung: **19.01.2022**
(21) Anmeldenummer: 20166466.1
(22) Anmeldetag: 27.03.2020
(51) Int. Cl.: E04H 6/02, E04F 10/00, H01L 31/00, E04B 7/02, F24S 20/60, H02S 20/23, F24S 25/35, F24S 25/632, F24S 25/634, F24S 25/70, E04F 10/08, F24S 20/00, F24S 20/67, F24S 25/60, F24S 25/00, H02S 30/00, H02S 30/20, H02S 30/10

(54) **ÜBERDACHUNGSSYSTEM SOWIE TRÄGERMODUL HIERFÜR**
ROOFING SYSTEM AND SUPPORT MODULE FOR SAME
SYSTÈME DE TOITURE ET MODULE DE SUPPORT ASSOCIÉ

(30) Priorität: 28.03.2019 DE 102019108036
(43) Veröffentlichungstag der Anmeldung: 30.09.2020
(73) Patentinhaber: Hoffmann, Walter, 65527 Niedernhausen (DE)
(72) Erfinder: Hoffmann, Walter, 65527 Niedernhausen (DE)
(74) Vertreter: WSL Patentanwälte Partnerschaft mbB

(56) Entgegenhaltungen:
- EP-A2- 2 234 174
- DE-A1- 3 012 346

## Beschreibung

Die vorliegende Erfindung betrifft ein Überdachungssystem sowie ein Trägermodul hierfür. Das Überdachungssystem kann beispielsweise für Terrassenüberdachungen, Carports, Vordächer, Überdachungen von Freifeldflächen, usw. verwendet werden. Die Überdachung besteht dabei aus einer Vielzahl von parallel zueinander angeordneten Trägermodulen, deren Abstand voneinander durch Zwischenelemente überbrückt wird. Als Zwischenelemente rücken zunehmend Photovoltaikmodule in den Fokus, welche es mittlerweile auch als halbtransparente Module gibt, welche einen gewissen Anteil an Sonnenlicht durchlassen.

Es gibt bereits entsprechende Photovoltaiküberdachungen. Diese werden jedoch überwiegend aus üblichen Aluminiumprofilen als Stahlbaukonstruktion oder aus Holz hergestellt. Dies sind jedoch in der Regel Prototypen, die lediglich einmal bei einem Testkunden aufgebaut worden sind. Andere Systeme werden speziell für den Kunden gefertigt, was aufwendig ist.

Die üblichen Überdachungen sehen keine Integration von Photovoltaikmodulen vor. Bei den üblichen Überdachungen werden die Zwischenelemente auf die Trägermodule derart aufgelegt, dass sie nebeneinander liegen und die Kantenflächen sich tatsächlich oder nahezu berühren. Da es bei Überdachungen unerwünscht ist, dass Regenwasser zwischen den Kantenflächen von benachbarten Zwischenelementen durchdringen kann, ist es bei der Montage notwendig, die Zwischenelemente zu betreten, um die sich durch aneinander liegende Kantenflächen gebildeten Fugen abzudichten oder abzudecken. Photovoltaikmodule sind in der Regel nicht dafür ausgelegt, betreten zu werden, so dass die bekannten Überdachungssysteme nicht geeignet sind. Darüber hinaus müssen Photovoltaikmodule ab und an gewartet, repariert oder getauscht werden. Bei den bekannten Überdachungssystemen ist es in der Regel nicht möglich, ein einzelnes Zwischenelement zu tauschen ohne die anderen Zwischenelemente zu demontieren.

Die DE 30 12 346 A1 und die EP 2 234 174 A2 zeigen ebenfalls bekannte Überdachungssysteme. EP 2 234 174 A2 zeigt dabei ein Trägermodul gemäß der Präambel des Anspruchs 1.

Vor dem Hintergrund des beschriebenen Standes der Technik ist es daher Aufgabe der vorliegenden Erfindung, ein Trägermodul und ein Überdachungssystem mit einem solchen Trägermodul bereitzustellen, welches eine leichte Befestigung der Photovoltaikmodule am Trägermodul erlaubt.

Erfindungsgemäß wird diese Aufgabe durch ein Trägermodul gemäß Anspruch 1 gelöst.

Dadurch, dass ein lösbares Halteprofil vorgesehen ist, kann das Photovoltaik-Modul leicht befestigt oder demontiert werden, in dem das Halteprofil am Sparrenelement befestigt wird oder von diesem gelöst wird.

Die Aufnahmenut ist dafür vorgesehen, das Photovoltaikmodul zu halten. Das Modul wird daher mit seiner Kantenfläche in die Aufnahmenut eingeschoben. Dadurch, dass zumindest eine Nutwand von dem Halteprofil gebildet wird, kann das Photovoltaikmodul leicht entnommen oder montiert werden, indem das Halteprofil von dem Sparrenelement gelöst oder an diesem befestigt wird.

Erfindungsgemäß weist das Sparrenelement eine in Richtung der Länge l verlaufende Sparrennut auf, senkrecht zu der zumindest einen Aufnahmenut, in welche das Halteprofil eingreift. Beispielsweise kann die Sparrennut eine hinterschnittene Nut sein, in welcher ein am Halteprofil angeordneter und korrespondierend zur hinterschnittenen Nut ausgebildeter Nutenstein eingreift. Die Sparrennut kann beispielsweise als Schwalbenschwanznut ausgebildet sein.

Erfindungsgemäß weist das Halteprofil einen Eingriffsabschnitt auf, der in das Halteprofil eingreift, dessen Außenkontur der Innenkontur der Sparrennut entspricht. Dabei kann die Sparrennut hinterschnitten sein und das Halteprofil entweder einen korrespondierend geformten Nutenstein aufweisen, sodass es in Richtung der Länge l in die Sparrennut eingeschoben werden kann, oder kann ein elastisches Element aufweisen, sodass es in die Sparrennut eingeclipst werden kann.

Alternativ ist es möglich, dass zwei Halteprofile mit jeweils einem Eingriffsabschnitt vorgesehen sind, die beide in das Halteprofil eingreifen und in Breitenrichtung b nebeneinander angeordnet sind. Beispielsweise könnte ein Halteprofil eine Aufnahmenut aufweisen, die in Richtung eines rechts neben dem Trägermodul angeordneten weiteren Trägermoduls ausgerichtet ist, und das zweite Halteprofil eine Aufnahmenut aufweisen, die in Richtung eines links neben dem Trägermodul angeordneten Trägermoduls ausgerichtet ist. Die Aufnahmenuten der beiden Halteprofile sind somit für Photovoltaikmodule vorgesehen, die in Breitenrichtung b nebeneinander angeordnet sind, d.h. nicht zwischen denselben Trägermodulen befestigt sind. In der bevorzugten Ausführungsform weisen jedoch beide Halteprofile einen Eingriffsabschnitt auf, der in dieselbe Sparrennut eingreift. Erfindungsgemäß ist die Sparrennut senkrecht zu den Aufnahmenuten ausgerichtet. Beispielsweise könnte die Sparrennut nach oben offen ausgerichtet sein, während die Aufnahmenuten nach rechts oder links offen ausgerichtet sind.

In einer besonders bevorzugten Ausführungsform ist vorgesehen, dass die Aufnahmenut mit zwei gegenüberliegenden Nutwänden in dem Halteprofil ausgebildet ist. In diesem Fall wird das Photovoltaik-Modul vollständig im Halteprofil aufgenommen und kann zusammen mit diesem montiert oder demontiert werden.

In einer weiteren bevorzugten Ausführungsform ist vorgesehen, dass ein Satz von mehreren, vorzugsweise von zwei, sich in Richtung der Länge l erstreckenden Aufnahmenuten mit gegenüberliegenden Nutwänden vorgesehen ist, wobei die Aufnahmenuten in Höhenrichtung, d.h. in Richtung der Höhe h, voneinander beabstandet sind.

Damit können mehrere Photovoltaikmodule in verschiedenen Höhen am Trägermodul montiert werden.

Dies ist insbesondere dann von Vorteil, wenn die Länge l des Trägermoduls und damit die Länge der zu errichtenden Überdachung größer ist als die Länge eines Photovoltaikmoduls. In diesem Fall müssen in Richtung der Länge l mehrere Photovoltaikmodule angeordnet werden. Dies ist zwar prinzipiell in derselben Nut möglich, hat jedoch dann den Nachteil, dass die Photovoltaik-Module in Längsrichtung, d. h. in Richtung der Länge l, Kante an Kante liegen und daher die oben beschriebenen Abdichtungsschwierigkeiten bestehen.

Durch die mehreren in Höhenrichtung voneinander beabstandeten Aufnahmenuten ist es nicht notwendig, dass die Photovoltaikmodule in Richtung der Länge l auf Stoß montiert werden, sondern sie können stattdessen leicht überlappend angeordnet werden.

Werden nun die Trägermodule geneigt angeordnet, bilden die überlappenden Photovoltaikmodule ein Dach, ohne dass die Gefahr besteht, dass Wasser zwischen den Trägermodulen hindurchtritt und auf die darunter liegende Terrasse tropft. Regenwasser kann stattdessen in Längsrichtung problemlos über die Photovoltaik-Module abfließen. Im Grunde genommen ähnelt diese Anordnung der Anordnung von Dachziegeln, wobei die Photovoltaik-Module nicht auf Dachlatten aufliegen, sondern vom Trägermodul in den Aufnahmenuten gehalten werden.

In einer bevorzugten Ausführungsform verlaufen die Aufnahmenuten parallel zueinander. Zwar sind grundsätzlich auch Aufnahmenuten denkbar, die nicht exakt zueinander parallel ausgebildet sind, dies ist jedoch in der Regel schon aus optischen Gründen nachteilig. Zudem kann dies die Entnahme der Photovoltaik-Module in Längsrichtung erschweren. Unter parallel ist hier zu verstehen, dass die Nuten in Längsrichtung parallel zueinander ausgerichtet sind und die Nuten in dieselbe Richtung orientiert sind, so dass Aufnahmenuten auf derselben Seite des Trägermoduls angeordnet sind.

Darüber hinaus kann das Trägermodul zwei Sätze von mehreren, sich in Richtung der Länge l erstreckende Aufnahmenuten aufweisen, wobei die Aufnahmenuten des einen Satzes antiparallel zu den Aufnahmenuten des anderen Satzes verlaufen. Unter antiparallel ist in diesem Zusammenhang zu verstehen, dass die Nuten entgegengesetzt zueinander angeordnet sind. Werden beispielsweise drei Trägermodule parallel zueinander angeordnet, kann das mittlere Trägermodul einen Satz von Aufnahmenuten aufweisen, die in Richtung des links angeordneten Trägermoduls ausgerichtet sind, und einen zweiten Satz von Aufnahmenuten aufweisen, die in Richtung des rechts angeordneten Trägermoduls angeordnet sind. Die Aufnahmenuten, die in Richtung des rechts angeordneten Trägermoduls angeordnet sind, sind daher antiparallel zu den Aufnahmenuten, die in Richtung des links angeordneten Trägermoduls angeordnet sind, ausgebildet. Daher können Photovoltaikmodule beidseitig in das Trägermodul eingeschoben werden.

Es ist möglich, dass das Halteprofil zunächst auf die Kanten des Photovoltaikmoduls aufgeschoben wird und dann das Halteprofil an dem Sparrenelement befestigt wird. Es ist auch möglich, das Halteprofil zunächst am Sparrenelement zu befestigen und dann das Photovoltaikmodul mit seiner Kante in die von dem Halteprofil gebildete Nut zu schieben.

In einer bevorzugten Ausführungsform sind die mehreren Aufnahmenuten eines Satzes in dem Halteprofil ausgebildet. Das Halteprofil weist somit eine Mehrzahl von parallelen Aufnahmenuten auf, die allesamt in dieselbe Richtung ausgerichtet sind.

Alternativ ist in einer bevorzugten Ausführungsform vorgesehen, dass mehrere Halteprofile vorgesehen sind, die lösbar an dem Sparrenelement befestigt sind, wobei in jedem Halteprofil eine andere der mehreren Aufnahmenuten eines Satzes ausgebildet ist. Dabei sind die Halteprofile in Längsrichtung zueinander versetzt an dem Sparrenelement lösbar befestigt.

Beispielsweise können drei Photovoltaikmodule in Richtung der Länge l nebeneinander oder überlappend an einem Trägermodul befestigt werden. Bei der überlappenden Ausführungsform ist jedem Photovoltaikmodul ein eigenes Halteprofil zugeordnet, welches mit dem Sparrenelement verbunden werden kann.

In einer weiteren bevorzugten Ausführungsform erstrecken sich die mehreren Halteprofile über mindestens 80 %, vorzugsweise über mindestens 90 % der Länge des Sparrenelementes.

In einer bevorzugten Ausführungsform hat ein Halteprofil zwei das Halteprofil begrenzende Stirnflächen, wobei zumindest eine Stirnfläche mit der Längsrichtung einen Winkel einschließt, der kleiner als 90° und vorzugsweise kleiner als 50° und am besten kleiner als 40° ist.

Durch die Abschrägung der Stirnfläche können zwei Halteprofile derart nebeneinander in Längsrichtung des Sparrenelementes angeordnet werden, dass sie sich mit ihren abgeschrägten Stirnflächen berühren.

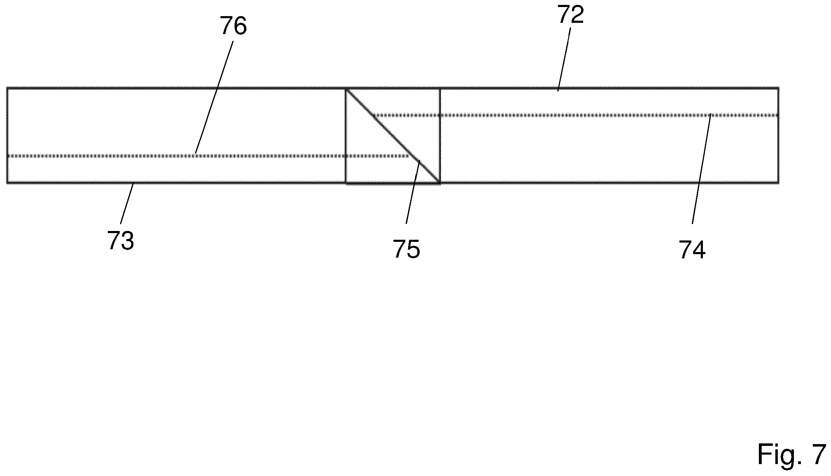

Eine solche Anordnung ist in einer schematischen Seitenansicht in Figur 7 dargestellt. Hier sind zwei Halteprofile 72,73 nebeneinander angeordnet. Beide Halteprofile 72, 73 haben entsprechend abgeschrägte Stirnflächen 75, die korrespondierend zueinander ausgebildet sind, so dass sie, wie in der Figur 7 gezeigt, im montierten Zustand aneinander liegen. Sowohl das rechte Halteprofil 72 als auch das linke Halteprofil 73 stellen Aufnahmenuten (nicht gezeigt) bereit in die entsprechende Photovoltaikmodule 74, 76 trägt. Die beiden Halteprofile 72,73 werden in der Praxis gegenüber der Vertikalen leicht geneigt angeordnet, sodass das rechte Halteprofil 72 höher als das linke Halteprofil 73 angeordnet ist und auftreffendes Regenwasser in der Figur 7 von rechts nach links über die Photovoltaikmodule, die überlappend angeordnet sind, abfließen kann.

Durch die abgeschrägte Ausführung der Stirnflächen können diese ebenfalls überlappend angeordnet werden, um auch im Bereich der Halteprofile zu verhindern, dass Regenwasser in die Zwischenräume zwischen benachbarten Halteprofile eindringt.

In einer weiteren bevorzugten Ausführungsform ist vorgesehen, dass das Halteprofil einen im Wesentlichen U-förmigen Querschnitt aufweist, wobei der eine U-Schenkel in die Sparrennut eingreift und an dem anderen U-Schenkel zwei Lamellen angeordnet sind, welche zusammen mit dem anderen U-Schenkel die Aufnahmenut bilden.

Beispielsweise kann die Sparrennut nach oben offen sein, sodass das U-förmige Halteprofil einfach in die nach oben offene Sparrennnut eingesetzt werden kann.

Erfindungsgemäß weist das Überdachungssystem für Terrassen, Balkone oder Parkplätze eine Vielzahl von parallel zueinander angeordneten Trägermodulen, wie sie hier beschrieben wurden, auf, wobei die Aufnahmenuten der Trägermodule einander zugewandt sind und zwischen jeweils zwei Trägermodulen mindestens ein Photovoltaikmodul in den einander zugewandten Aufnahmenuten eingesetzt ist.

In einer bevorzugten Ausführungsform ist ein Querträger vorgesehen, auf welchem die Trägermodule einseitig aufliegen. Die Trägermodule können auf der anderen Seite entweder an einem weiteren Element, wie zum Beispiel einer Hauswand, befestigt sein oder auf einem anderen Querträger aufliegen.

Die Querträger können ihrerseits entweder an Wänden befestigt sein oder durch entsprechende Pfosten, die auf dem Boden aufstehen, gehalten werden.

Weitere Vorteile, Merkmale und Anwendungsmöglichkeiten werden deutlich anhand der folgenden Beschreibung von Ausführungsformen und der zugehörigen Figuren. Es zeigen:
- Figuren 1a bis 1c: verschiedene Ansichten einer ersten Ausführungsform,
- Figuren 2a bis 2c: verschiedene Ansichten einer nicht erfindungsgemäßen zweiten Ausführungsform
- Figur 3: eine dritte nicht erfindungsgemäße Ausführungsform,
- Figur 4: eine vierte und fünfte nicht erfindungsgemäße Ausführungsform,
- Figur 5: einer erfindungsgemäßen Ausführungsform,
- Figur 6: eine weitere erfindungsgemäße Ausführungsform und
- Figur 7: eine schematische Seitenansicht auf zwei Halteprofile mit abgeschrägter Stirnfläche.

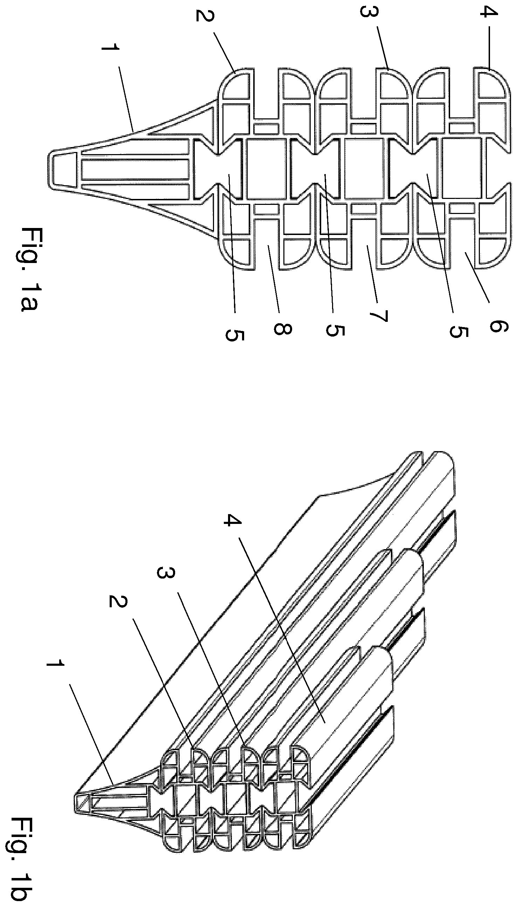

In den Figuren 1a bis 1c sind verschiedene Ansichten einer ersten Ausführungsform eines Trägermoduls gezeigt. Das Trägermodul weist ein Sparrenelement 1 und insgesamt drei Halteprofile 2, 3, 4 auf, die allesamt an dem Sparrenelement 1 befestigt werden können. Sowohl das Sparrenelement 1 als auch die Halteprofile haben Schwalbenschwanznuten, in welche entsprechende schwalbenschwanzförmige Verbindungssteine 5 eingesetzt werden können, um ein Halteprofil 2 an dem Sparrenelement 1 zu befestigen und die weiteren Halteprofile 3, 4 jeweils an einem anderen Halteprofil zu befestigen.

Die Halteprofile 2, 3, 4 weisen jeweils zwei Aufnahmenuten 6, 6', 7, 7' und 8, 8' auf. Die Aufnahmenuten 6 und 6' sind antiparallel angeordnet, d.h. sie weisen in unterschiedliche Richtungen. Die Aufnahmenuten 6, 7, 8 sind parallel zueinander angeordnet, d.h. sie zeigen in dieselbe Richtung, und sind in Richtung der Höhe h voneinander beabstandet.

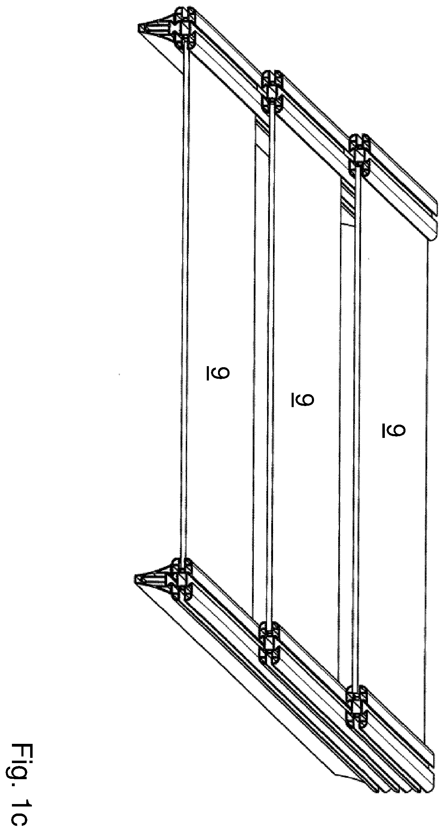

Wie insbesondere in den Figuren 1a und 1b zu erkennen ist, stellen die Halteprofile 2, 3, 4 an jeder Seite des Trägermoduls drei Aufnahmenuten zur Aufnahme von Photovoltaikmodulen zur Verfügung. Die Aufnahmenuten sind in unterschiedlichen Ebenen angeordnet, sodass sich beim Einschieben der Photovoltaikmodule 9 in die Aufnahmenuten die in Figur 1c gezeigte gestufte Anordnung der Photovoltaikmodule ergibt, wobei die Module überlappend angeordnet sind.

Da in der Regel die Trägermodule mit einer leichten Neigung montiert werden, wird eventuell aufschlagendes Regenwasser von den Photovoltaikmodulen abfließen, sodass es nicht notwendig ist, die Photovoltaikmodule gegeneinander abzudichten.

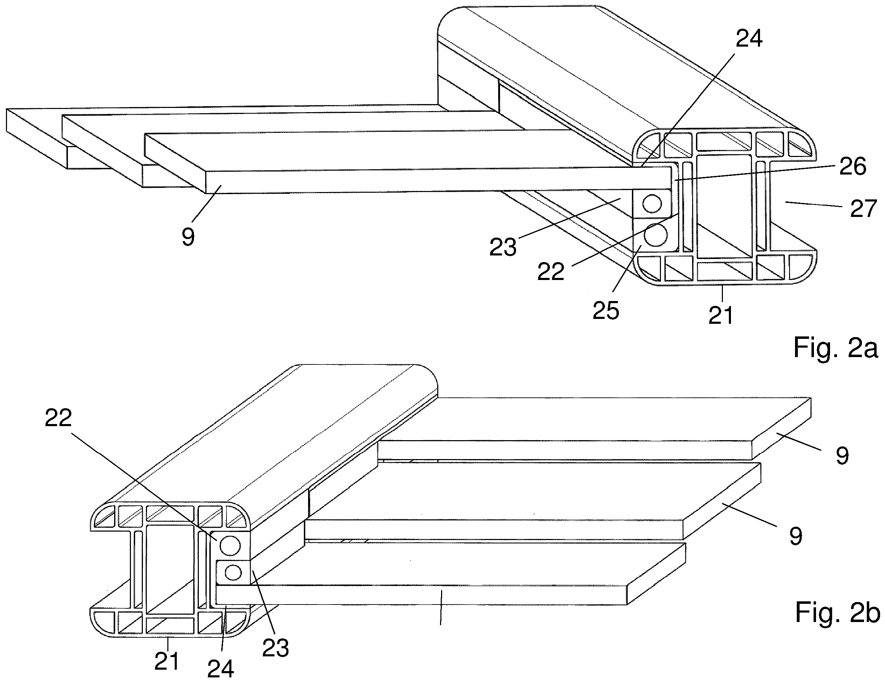

In den Figuren 2a bis 2c ist eine zweite nicht erfindungsgemäße Ausführungsform dargestellt. Auch hier ist ein Sparrenelement 21 mit zwei gegenüberliegende Aufnahmenuten 27 vorgesehen. Bei dieser Ausführungsform ist in die Aufnahmenut 27 ein Halteprofil 22 eingesetzt. Man erkennt, dass die Innenfläche der Aufnahmenut 27 des Sparrenelementes 21 im Wesentlichen der Außenkontur des Halteprofils 22 entspricht. Das Halteprofil 22 weist selbst wiederum eine Aufnahmenut auf, in welche sowohl das Photovoltaikmodul als auch ein Klemmelement 23 eingelegt werden kann.

Durch diese Konstruktion können mehrere Aufnahmenuten in verschiedenen Höhen verwirklicht werden, obwohl das Trägerprofil nur eine durchgehende Aufnahmenut 27 aufweist.

Das Halteprofil 22 hat einen u-förmigen Querschnitt mit einem U-Grund 26 und zwei U-Schenkeln (24,25), nämlich einem schmalen U-Schenkel 24 und einem breiten U-Schenkel 25. Daher kann das Halteprofil in zwei um 180° zueinander gedrehten Varianten in die Aufnahmenut 27 des Sparrenelementes 21 eingesetzt werden. So erkennt man beispielsweise in Figur 2a, dass das Halteprofil 22 derart in die Nut 27 eingesetzt worden ist, dass der schmale U-Schenkel 24 oben liegt. In Figur 2b ist hingegen eine Konfiguration gezeigt, bei welcher das Halteprofil 22 derart in der Aufnahmenut 27 positioniert ist, dass der schmale U-Schenkel 24 unten liegt.

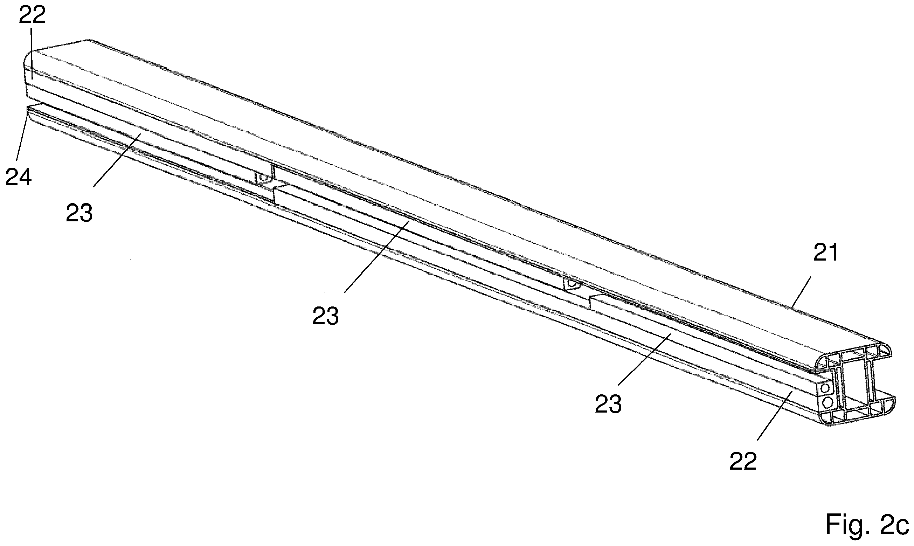

Das Klemmelement 23 ist derart dimensioniert, dass es zusammen mit dem Photovoltaikmodul 9 die Aufnahmenut innerhalb des Halteprofils 22 ausfüllt. Auch hier kann das Klemmelement 23 entweder oberhalb oder unterhalb des Photovoltaikmoduls positioniert werden. Dadurch können drei Aufnahmenuten in unterschiedlichen Höhen verwirklicht werden, wie in Figur 2c am besten zu erkennen ist.

Im linken Drittel des Trägerprofils 21 der Figur 2C ist das Halteprofil 22 derart positioniert, dass der breite Schenkel 25 oben liegt. Da das Klemmelement 23 im linken Drittel des Trägerprofils 21 innerhalb der Aufnahmenut des Halteprofils 22 oben positioniert ist, ergibt sich eine Aufnahmenut für ein Photovoltaikmodul, das in etwa im unteren Drittel der Aufnahmenut 27 des Trägerprofils 21 positioniert ist. Im mittleren und rechten Drittel des Trägerprofils 21 in Figur 2c ist das Halteprofil 22 derart orientiert, dass der breite U-Schenkel 25 unten liegt. Es sind nun zwei Klemmelemente 23 vorgesehen, wovon eines im rechten Drittel und ein anderes im mittleren Drittel des Trägerprofils 21 in Figur 2c positioniert ist. Während im rechten Drittel das Klemmelement 23 innerhalb der Aufnahmenut des Halteprofils 22 unten positioniert ist, ist das Klemmelement 23 im mittleren Drittel oben positioniert. Im Ergebnis verbleibt daher eine Aufnahmenut für das Photovoltaikmodul, welche im rechten Drittel höher liegt als im mittleren Drittel, während sie im linken Drittel noch weiter unten liegt.

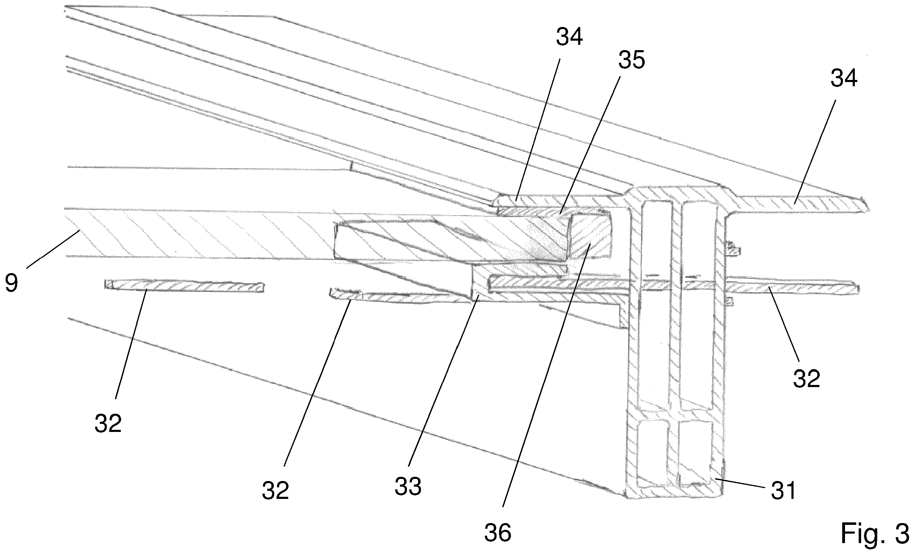

In Figur 3 ist eine dritte nicht erfindungsgemäße Ausführungsform gezeigt. Hier besteht das Sparrenelement 31 aus einem als T-Träger ausgebildeten Sparrenelement 31. Die Schenkel 34 des T-Trägers sind gleich ausgebildet.

Das Sparrenelement 31 weist eine Reihe von Öffnungen auf, in welchen Haltestäbe 32 eingesteckt sind. Die Haltestäbe 32 können in verschiedenen Höhen eingesteckt werden, wie in der Figur 3 u sehen ist. Des Weiteren ist ein Halteprofil 33 vorgesehen, das den Haltestab 32 teilweise umschließt und von diesem gehalten wird. Es können mehrere Haltestäbe 32 zum Halten eines Halteprofils 33 vorgesehen sein.

Das Halteprofil 33 bildet eine Nutwand der Aufnahmenut für das Photovoltaik-Modul 9. Die andere Nutwand kann durch den Schenkel 34 des Sparrenelement 31 gebildet werden. In der in Figur 3 gezeigten Ausführungsform ist eine Halteschiene 35 zwischen Schenkel 34 und Photovoltaik-Modul angeordnet. In der Figur ist zu erkennen, dass das Sparrenelement 31 derart dimensioniert ist, dass zwischen Photovoltaik-Modul 9 und Sparrenelement 31 Platz für eine Kabelführung 36 verbleibt.

In einer alternativen nicht erfindungsgemäßen Ausführungsform, die in den Figuren nicht gezeigt ist, wird anstelle des T-Trägers ein I-Träger als Sparrenelement verwendet. Das Halteprofil ist dann mit einer eigenen Aufnahmenut ausgestattet, in welche das Photovoltaik-Modul 9 eingesetzt werden kann. Das Halteprofil wird ansonsten wie in der in Figur 3 gezeigten Ausführungsform gehalten.

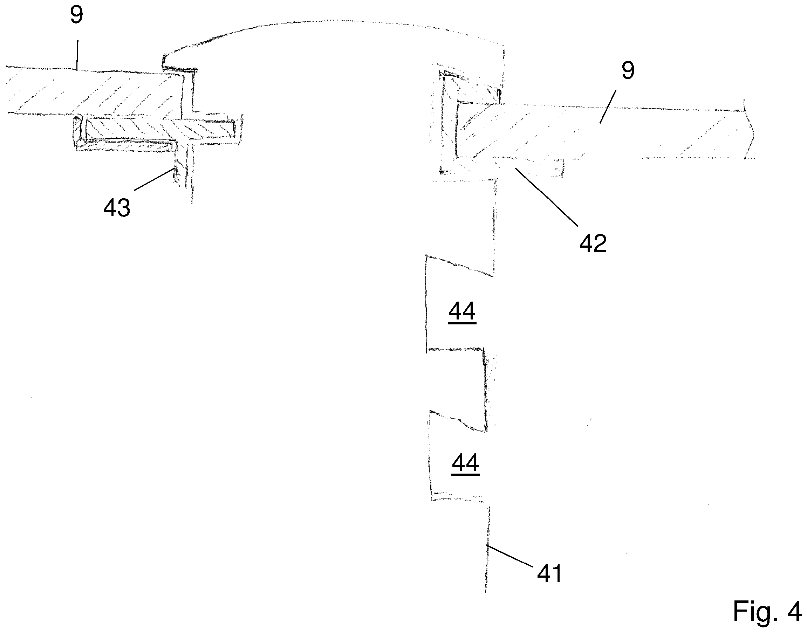

In Figur 4 ist eine vierte und fünfte nicht erfindungsgemäße Ausführungsform gezeigt. Das Sparrenelement 41 ist hier ir einer Teilschnittansicht dargestellt. Das Sparrenelement 41 weist eine Mehrzahl von Nuten 44 auf, die in unterschiedlichen Höhen angeordnet sind. Auf der rechten Seite in Figur 4 ist ein Halteprofil 42, welches ein Photovoltaikmodul 9 umgreift, in die oberste Nut 44 eingesetzt. Die Anordnung der Photovoltaikmodul 9 in verschiedenen Ebenen kann daher derart verwirklicht werden, dass das Halteprofil 42 in unterschiedlichen Nuten 44 eingesetzt wird.

In einer fünften nicht erfindungsgemäßen Ausführungsform, die in Figur 4 links zu sehen ist, ist das Halteprofil 43 derart ausgebildet, dass es, wenn es in die Nut im Sparrenelement 41 eingesetzt wird, eine stabile Auflagefläche für ein Photovoltaikmodul 9 bildet. Auch hier weist das Sparrenelement eine Reihe von parallel zueinander angeordneten Sparrennnuten auf, in welche ein Halteprofil eingesetzt worden ist, welches wiederum mehrere Aufnahmenuten zur Aufnahme der Photovoltaikmodule bereitstellt. Auch hier werden drei Ebenen für Photovoltaikmodule bereitgestellt. Das Halteprofil kann aus einem elastischen Material bestehen, welches die Kantenflächen der Photovoltaikmodule abdichtet, um ein Durchdringen von Regenwasser zu vermeiden. Die Halteprofile können auf die Photovoltaikmodule aufgeklebt werden.

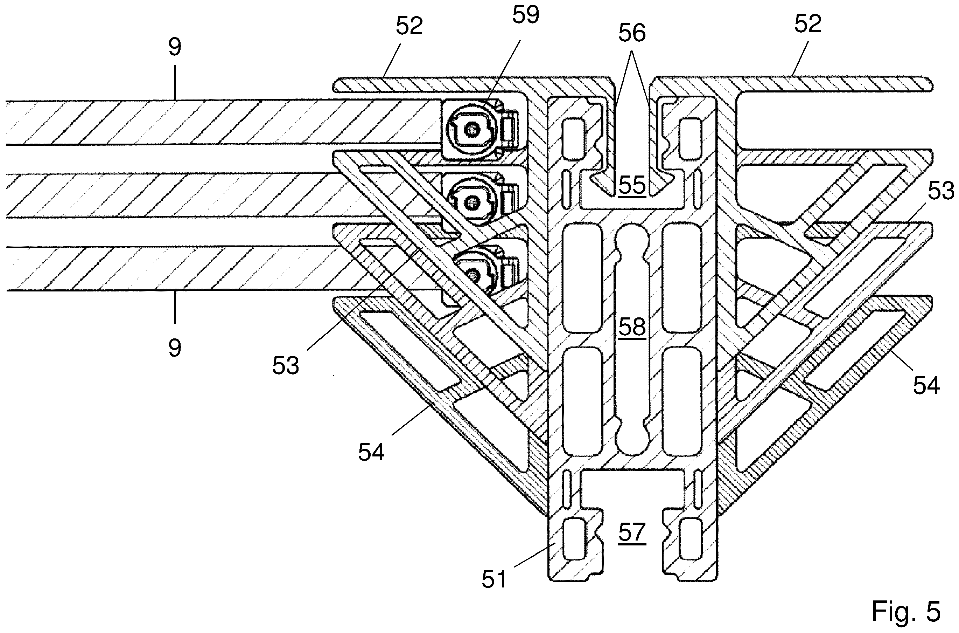

In Figur 5 ist eine erfindungsgemäße Ausführungsform gezeigt, bei welcher das Sparrenelement 51 an einer Oberseite eine Sparrennut 55 aufweist, in welche beidseitig drei Halteprofile 52, 53, 54 eingesetzt werden, welche ihrerseits wieder entsprechende Nuten zur Aufnahme von Photovoltaikmodulen bereitstellen. Die Figur 5 zeigt eine Schnittansicht. Man erkennt hier auf beiden Seiten des Sparrenelementes 51 jeweils drei Halteprofile 52, 53,54, welche ihrerseits Aufnahmenuten in unterschiedlichen Höhen bereitstellen.

Jedes Halteprofil 52, 53,54 weist einen Eingriffsabschnitt 56 auf, der in die Sparrennut 55 eingreift.

Bei der gezeigten Ausführungsform ist die Sparrennut 55 als hinterschnittene Nut ausgebildet. Der Eingriffsabschnitt 56 ist elastisch ausgebildet und weist eine Rastnase auf, die mit der hinterschnittenen Nut verrastet. Die Halteprofil 52, 53,54 weisen alle entsprechende Eingriffsabschnitte 56 auf. Sie unterscheiden sich lediglich dadurch, dass die durch das Halteprofil bereitgestellte Aufnahmenut in unterschiedlicher Höhe angeordnet ist. In Figur 5 links sind entsprechende Photovoltaikmodule 9 dargestellt, die in den Aufnahmenuten angeordnet sind. An den Kanten der Photovoltaikmodule 9 sind Anschlusskabel 59 angeordnet.

Das Sparrenelement 51 weist eine Multifunktionsnut 57 auf. Beispielsweise könnte in der Multifunktionsnut eine Beleuchtung, wie z.B. eine LED-Beleuchtung untergebracht werden. In der gezeigten Ausführungsform ist die Multifunktionsnut 57 genau wie die Sparrennut 55 aufgebaut, sodass das Sparrenelement 51 symmetrisch ausgebildet ist. Innerhalb des Sparrenelementes 51 ist ein Verstärkungsraum 58 vorgesehen, in welchen ein Verstärkungselement aus dem gleichen oder aus einem anderen Material eingeschoben werden kann, falls dies für den gewünschten Anwendungsfall erforderlich ist. Prinzipiell ist es auch möglich, in andere Hohlkammern des Profils Verstärkungselemente einzubringen.

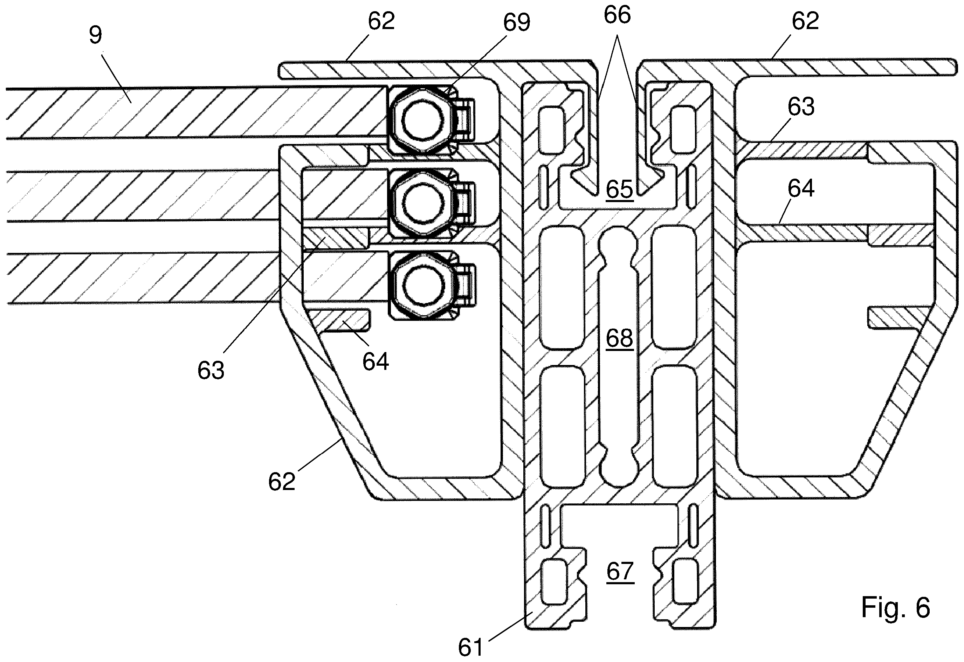

Schließlich ist in Figur 6 eine weitere erfindungsgemäße Ausführungsform gezeigt. Auch hier ist ein Sparrenelement 61 vorgesehen, dass eine Sparrennut 65 und eine Multifunktionsnut 67 aufweist.

Die Halteprofile 62, 63, 64 greifen mit entsprechenden Eingriffsabschnitten 66, die elastisch mit Rastnase ausgeführt sind, in die Sparrennut 65 ein.

Die drei Halteprofile 62, 63, 64 stellen jeweils Aufnahmenuten in unterschiedlichen Höhen zur Verfügung, sodass, wie in Figur 6 links zu sehen ist, die entsprechenden Photovoltaikmodul 9 ebenfalls in drei verschiedenen Höhen montiert werden können. Die in Figur 6 gezeigte Ausführungsform unterscheidet sich von der in Figur 5 gezeigten Ausführungsform durch anders gestaltete Halteprofil 62, 63, 64. Die in Figur 6 gezeigte Ausführungsform hat den Vorteil, dass, wenn man von unten auf die Halteprofile schaut, die unterschiedlichen Halteprofile bündig miteinander abschließen, wenn sie nebeneinander angeordnet werden, obgleich sie Aufnahmenuten in unterschiedlichen Höhen bereitstellen.

In einer weiteren, nicht dargestellten Variante, kann zwischen den beiden Eingriffsabschnitten ein Haltebolzen eingeführt werden, um ein Abheben der Halteprofile aus dem Sparrenelement zu verhindern. Falls eine Abnahme des Halteprofils dennoch gewünscht ist, muss dann der Haltebolzen zunächst entfernt werden, um dem Eingriffsabschnitten zu ermöglichen, sich aus den Rastpositionen zu bewegen.

Das Überdachungssystem kann auch anstelle der PV-Module mit Hohlkammerplatten oder mit Glasplatten verwirklicht werden, falls zum Errichtungszeitpunkt keine PV-Module gewünscht werden. Die Hohlkammer- oder Glasplatten können dann zu einem späteren Zeitpunkt gegen PV-Module ausgetauscht werden. Das Überdachungssystem ist somit "PV-ready".

Des Weiteren ist es möglich, in das Sparrenelement, in einen Querträger oder einen Pfosten einen Stromspeicher und/oder einen Wechselrichter zu integrieren. Auch ist es von Vorteil, wenn in einen Pfosten eine Ladestation für Elektrofahrzeuge oder zumindest eine elektrische Steckdose, z.B. eine 220 V-Steckdose integriert ist. Dazu kann Sparrenelement, Querträger oder Pfosten entsprechende Kammern aufweisen, in welche die genannten Elemente integriert werden können. Die benötigte Verkabelung kann auch innerhalb von Sparrenelement, Querträger und/oder Pfosten verlaufen.

Das Überwachungssystem kann eine zusätzliche Verschattung aufweisen, die oberhalb oder bevorzugt unterhalb der PV-Module angeordnet ist. Des Weiteren können zwischen den Pfosten Seitenverkleidungen vorgesehen sein, die ebenfalls PV-Module enthalten können und die gegebenenfalls verschiebbar sind. Aus dem Überdachungssystem kann dann mit wenigen Handgriffen ein Wintergarten oder ein sogenanntes "tiny house" erstellt werden.

### Bezugszeichenliste

- 1: Sparrenelement
- 2, 3, 4: Halteprofil
- 5: Verbindungssteine
- 6, 6', 7, 7', 8, 8': Aufnahmenut
- 9: Photovoltaikmodul
- 21: Sparrenelement
- 22: Halteprofil
- 23: Klemmelement
- 24: schmaler U-Schenkel
- 25: breiter U-Schenkel
- 26: U-Grund
- 27: Aufnahmenut
- 31: Sparrenelement
- 32: Haltestab
- 33: Halteprofil
- 34: Schenkel des T-Trägers
- 35: Halteschiene
- 36: Kabelführung
- 41: Sparrenelement
- 42, 43: Halteprofil
- 44: Nut
- 51: Sparrenelement
- 52, 53, 54: Halteprofil
- 55: Sparrennut
- 56: Eingriffsabschnitt
- 57: Multifunktionsnut
- 58: Verstärkungsraum
- 59: Anschlusskabel
- 61: Sparrenelement
- 62, 63, 64: Halteprofil
- 65: Sparrennut
- 66: Eingriffsabschnitt
- 67: Multifunktionsnut
- 68: Verstärkungsraum
- 69: Anschlusskabel
- 72, 73: Halteprofile
- 74, 76: Photovoltaikmodule
- 75: Stirnflächen

## Patentansprüche

1. Trägermodul zur Aufnahme von zumindest einem Photovoltaik-Modul (9, 74, 76), wobei das Trägermodul eine Länge l, einer Höhe h und einer Breite b hat, wobei die Länge l größer als die Höhe h und größer als die Breite b ist, wobei das Trägermodul zumindest eine sich in Richtung der Länge l erstreckende Aufnahmenut (6, 6', 7, 7', 8, 8', 27) mit gegenüberliegenden Nutwänden zur Aufnahme einer Kante eines Photovoltaikmoduls (9, 74, 76) aufweist, **wobei** das Trägermodul ein Sparrenelement (51, 61) und ein Halteprofil (52, 53, 54, 62, 63, 64) aufweist, wobei das Halteprofil lösbar an dem Sparrenelement befestigt ist und das Halteprofil zumindest eine Nutwand der Aufnahmenut ausbildet, **dadurch gekennzeichnet, dass** das Sparrenelement (51, 61) eine in Richtung der Länge l verlaufende Sparrennut (55, 65) aufweist, wobei die Sparrennut (55, 65) senkrecht zu der zumindest einen Aufnahmenut (6, 6', 7, 7', 8, 8', 27) ausgerichtet ist und dass entweder das Halteprofil (52, 53, 54, 62, 63, 64) einen Eingriffsabschnitt (56, 66), der in die Sparrennut (55, 65) des Sparrenelements (51, 61) eingreift, aufweist, dessen Außenkontur der Innenkontur der Sparrennut (55, 65) entspricht, oder zwei Halteprofile (52, 53, 54, 62, 63, 64) mit jeweils einem Eingriffsabschnitt (56 66) vorgesehen sind, die beide in die Sparrennut (55, 65) eingreifen und in Breitenrichtung b nebeneinander angeordnet sind.

2. Trägermodul nach Anspruch 1, **dadurch gekennzeichnet, dass** die Aufnahmenut (55, 65) mit zwei gegenüberliegenden Nutwänden in dem Halteprofil ausgebildet ist.

3. Trägermodul nach Anspruch 1 oder 2, **dadurch gekennzeichnet, dass** ein Satz von mehreren, vorzugsweise von zwei, sich in Richtung der Länge l erstreckende Aufnahmenuten mit gegenüberliegenden Nutwänden vorgesehen ist, wobei die Aufnahmenuten in Richtung der Höhe h voneinander beabstandet sind, wobei vorzugsweise die Aufnahmenuten parallel zueinander verlaufen, wobei besonders bevorzugt zwei Sätze von mehreren sich in Richtung der Länge I erstreckenden Aufnahmenuten vorgesehen sind, die parallel zueinander verlaufen, wobei die Aufnahmenuten des einen Satzes antiparallel zu den Aufnahmenuten des anderen Satzes verlaufen.

4. Trägermodul nach Anspruch 3, **dadurch gekennzeichnet, dass** die mehreren Aufnahmenuten des Satzes in dem Halteprofil ausgebildet sind.

5. Trägermodul nach Anspruch 3, **dadurch gekennzeichnet, dass** mehrere Halteprofile vorgesehen sind, die lösbar an dem Sparrenelement befestigt sind, wobei in jedem Halteprofil eine andere der mehreren Aufnahmenuten ausgebildet ist.

6. Trägermodul nach einem der Ansprüche 3-5, **dadurch gekennzeichnet, dass** ein Halteprofil zwei das Halteprofil begrenzende Stirnflächen (75) aufweist, wobei zumindest eine Stirnfläche (75) mit der Längsrichtung einen Winkel einschließt, der kleiner als 90° und vorzugsweise kleiner als 50° und am besten kleiner als 40° ist.

7. Trägermodul nach einem der Ansprüche 1 bis 6, **dadurch gekennzeichnet, dass** das Halteprofil einen im wesentlichen u-förmigen Querschnitt aufweist, wobei der eine U-Schenkel in die Sparrennut eingreift und an dem anderen U-Schenkel zwei Lamellen angeordnet sind, welche zusammen mit dem anderen U-Schenkel die Aufnahmenut bilden.

8. Überdachungssystem für Terrassen, Balkone oder Parkplätze mit einer Vielzahl von parallel zueinander angeordneten Trägermodulen nach einem der Ansprüche 1 bis 7, wobei die Aufnahmenuten der Trägermodule einander zugewandt sind und zwischen jeweils zwei Trägermodulen mindestens ein Photovoltaik-Modul (9, 74, 76) in den einander zugewandten Aufnahmenuten eingesetzt ist.

9. Überdachungssystem nach Anspruch 8, **dadurch gekennzeichnet, dass** ein Querträger vorgesehen ist, auf welchem die Trägermodule einseitig aufliegen.

## Claims

1. Support module for receiving at least one photovoltaic module (9, 74, 76), wherein the support module has a length 1, a height h and a width b, wherein the length 1 is greater than the height h and greater than the width b, wherein the support module has at least one receiving groove (6, 6', 7, 7', 8, 8', 27) which extends in the direction of the length 1 and which has opposing groove walls for receiving an edge of a photovoltaic module (9, 74, 76), wherein the support module has a rafter element (51, 61) and a retention profile (52, 53, 54, 62, 63, 64), wherein the retention profile is releasably secured to the rafter element and the retention profile forms at least one groove wall of the receiving groove, **characterised in that** the rafter element (51, 61) has a rafter groove (55, 65) which extends in the direction of the length l, wherein the rafter groove (55, 65) is orientated perpendicularly to the at least one receiving groove (6, 6,', 7, 7', 8, 8', 27) and **in that** either the retention profile (52, 53, 54, 62, 63, 64) has an engagement portion (56, 66) which engages in the rafter groove (55, 65) of the rafter element (51, 61) and whose outer contour corresponds to the inner contour of the rafter groove (55, 65) or there are provided two retention profiles (52, 53, 54, 62, 63, 64) which each have an engagement portion (56, 66) and which both engage in the rafter groove (55, 65) and which are arranged beside each other in the width direction b.

2. Support module according to claim 1, **characterised in that** the receiving groove (55, 65) is formed with two opposing groove walls in the retention profile.

3. Support module according to claim 1 or 2, **characterised in that** a set of several, preferably two receiving grooves which extend in the direction of the length l and which have opposing groove walls is provided, wherein the receiving grooves are spaced apart from each other in the direction of the height h, wherein the receiving grooves preferably extend parallel with each other, wherein particularly preferably two sets of a plurality of receiving grooves which extend in the direction of the length l and which extend parallel with each other are provided, wherein the receiving grooves of one set extend in an antiparallel manner with respect to the receiving grooves of the other set.

4. Support module according to claim 3, **characterised in that** the plurality of receiving grooves of the set are formed in the retention profile.

5. Support module according to claim 3, **characterised in that** there are provided a plurality of retention profiles which are releasably secured to the rafter element, wherein another of the plurality of retention grooves is formed in each retention profile.

6. Support module according to any one of claims 3 to 5, **characterised in that** a retention profile has two end faces (75) which delimit the retention profile, wherein at least one end face (75) defines with the longitudinal direction an angle which is less than 90° and preferably less than 50° and most advantageously less than 40°.

7. Support module according to any one of claims 1 to 6, **characterised in that** the retention profile has a substantially U-shaped cross-section, wherein one leg of the U-shape engages in the rafter groove and there are arranged on the other leg of the U-shape two plates which form the receiving groove together with the other leg of the U-shape.

8. Roofing system for terraces, balconies or parking spaces having a large number of support modules which are arranged parallel with each other according to any one of claims 1 to 7, wherein the receiving grooves of the support modules face each other and at least one photovoltaic module (9, 74, 76) is inserted between two support modules in each case in the mutually facing receiving grooves.

9. Roofing system according to claim 8, **characterised in that** a transverse beam on which the support modules are positioned at one side is provided.

## Revendications

1. Module de support pour loger au moins un module photovoltaïque (9, 74, 76), dans lequel le module de support a une longueur l, une hauteur h et une largeur b, dans lequel la longueur l est plus grande que la hauteur h et plus grande que la largeur b, dans lequel le module de support présente au moins une rainure de logement (6, 6', 7, 7', 8, 8', 27) s'étendant dans la direction de la longueur l avec des parois de rainure se faisant face pour loger une arête d'un module photovoltaïque (9, 74, 76), dans lequel le module de support présente un élément de chevron (51, 61) et un profil de maintien (52, 53, 54, 62, 63, 64),
dans lequel le profil de maintien est fixé de manière amovible sur l'élément de chevron et le profil de maintien réalise au moins une paroi de rainure de la rainure de logement, **caractérisé en ce que** l'élément de chevron (51, 61) présente une rainure de chevron (55, 65) s'étendant dans la direction de la longueur l, dans lequel la rainure de chevron (55, 65) est orientée de manière perpendiculaire par rapport à l'au moins une rainure de logement (6, 6', 7, 7', 8, 8', 27), et que soit le profil de maintien (52, 53, 54, 62, 63, 64) présente une section de prise (56, 66), qui vient en prise avec la rainure de chevron (55, 65) de l'élément de chevron (51, 61), dont le contour extérieur correspond au contour intérieur de la rainure de chevron (55, 65), soit deux profils de maintien (52, 53, 54, 62, 63, 64) sont prévus avec respectivement une section de prise (56, 66), qui tous deux viennent en prise avec la rainure de chevron (55, 65) et sont disposés côte à côte dans le sens de la largeur b.

2. Module de support selon la revendication 1, **caractérisé en ce que** la rainure de logement (55, 65) est réalisée avec deux parois de rainure se faisant face dans le profil de maintien.

3. Module de support selon la revendication 1 ou 2, **caractérisé en ce qu'**un jeu de plusieurs, de préférence de deux, rainures de logement s'étendant dans la direction de la longueur l avec des parois de rainure se faisant face, dans lequel les rainures de logement sont espacées les unes des autres dans le sens de la hauteur h, dans lequel de préférence les rainures de logement s'étendent de manière parallèle les unes par rapport aux autres, dans lequel de manière particulièrement préférée deux ensembles de plusieurs rainures de logement s'étendant dans le sens de la longueur l sont prévus, qui s'étendent de manière parallèle l'un par rapport à l'autre, dans lequel les rainures de logement d'un jeu s'étendent de manière antiparallèle par rapport aux rainures de logement de l'autre ensemble.

4. Module de support selon la revendication 3, **caractérisé en ce que** les plusieurs rainures de logement de l'ensemble sont réalisées dans le profil de maintien.

5. Module de support selon la revendication 3, **caractérisé en ce que** plusieurs profils de maintien sont prévus, qui sont fixés de manière amovible sur l'élément de chevron, dans lequel une autre des plusieurs rainures de logement est réalisée dans chaque profil de maintien.

6. Module de support selon l'une quelconque des revendications 3 - 5, **caractérisé en ce qu'**un profil de maintien présente deux surfaces frontales (75) délimitant le profil de maintien, dans lequel au moins une surface frontale (75) forme avec le sens longitudinal un angle, qui est inférieur à 90° et de préférence est inférieur à 50° et idéalement est inférieur à 40°.

7. Module de support selon l'une quelconque des revendications 1 à 6, **caractérisé en ce que** le profil de maintien présente une section transversale sensiblement en forme de u, dans lequel une branche du U vient en prise dans la rainure de chevron et deux lamelles, lesquelles forment conjointement avec l'autre branche du U la rainure de logement, sont disposées sur l'autre branche du U.

8. Système de toiture pour des terrasses, des balcons ou des emplacements de stationnement avec une pluralité de modules de support disposés de manière parallèle les uns par rapport aux autres selon l'une quelconque des revendications 1 à 7, dans lequel les rainures de logement des modules de support sont tournées les unes vers les autres et au moins un module photovoltaïque (9, 74, 76) est inséré dans les rainures de logement tournées les unes vers les autres entre respectivement deux modules de support.

9. Système de toiture selon la revendication 8, **caractérisé en ce qu'**un support transversal est prévu, sur lequel les modules de support reposent d'un côté.
